**Europäisches Patentamt**

**European Patent Office**

**Office européen des brevets**

(11) Veröffentlichungsnummer: **0 109 032**
**B1**

(12) # EUROPÄISCHE PATENTSCHRIFT

(45) Veröffentlichungstag der Patentschrift:
24.02.88

(21) Anmeldenummer: 83111125.7

(22) Anmeldetag: 08.11.83

(51) Int. Cl.⁴: **F 24 D 3/00, F 24 D 3/10**

(54) **Fernheizungsanlage mit Anschlussvorrichtung.**

(30) Priorität: 10.11.82 DE 3241536

(43) Veröffentlichungstag der Anmeldung:
23.05.84 Patentblatt 84/21

(45) Bekanntmachung des Hinweises auf die Patenterteilung:
24.02.88 Patentblatt 88/8

(84) Benannte Vertragsstaaten:
AT CH FR LI

(56) Entgegenhaltungen:
EP-A-0 035 642
EP-A-0 092 032
CH-A-465 813
DE-B-2 734 553

(73) Patentinhaber: **Grammer, Meinrad, Geigerweg 4,
D-7407 Rottenburg 15- Ergenzingen (DE)**

(72) Erfinder: **Grammer, Meinrad, Geigerweg 4, D-7407
Rottenburg 15 (DE)**
Erfinder: **Fuchs, Siegfried, Hanweilerstrasse 38,
D-7054 Korb (DE)**

(74) Vertreter: **Ott, Elmar, Dipl.- Ing., Kappelstrasse 8,
D-7240 Horb 1 (DE)**

EP 0 109 032 B1

## Beschreibung

Die Erfindung betrifft eine Fernheizungsanlage gemäß Oberbegriff des Hauptanspruchs.

Die für Fernheizungen erforderlichen Übergabestationen, die die Schnittstelle zwischen Fernwärmenetz und der hauseigenen Installation darstellen, benötigen verschiedene Meß- und Regeleinheiten. Dennoch sollten diese Übergabestationen möglichst kompakt ausgeführt werden, damit möglichst wenig Platz verloren geht. Die bisher bekannten Übergabestationen werden vom Heizungsinstallateur vor Ort zusammengestellt, d. h., die einzelnen erforderlichen Armaturen werden durch einzelne Rohre miteinander verbunden. Die erforderlichen Armaturen und Einrichtungen, beispielsweise Wärmezähler, Druckregler, Manometer, Thermostate, Entlüftungs- und Entleerungsventile, Sicherheitsventile, Schmutzfänger, etc., müssen mit einem großen Arbeitsaufwand einzeln installiert werden.

Aus der EP-A-92 032, die nach dem Anmeldetag der vorliegenden Anmeldung veröffentlicht wurde (Artikel 54(3)EPÜ), ist eine Vorrichtung zum Übergeben von Wärme von einer Versorgungsleitung zu einem Abnehmer bekannt, bei der ein Rohrverzweigungssystem verwendet wird, welches in mehrere Kammern unterteilt ist, die über Öffnungen miteinander verbunden sind. In eine der Kammern ragt ein Ventilteller, der eine zwischen zwei Kammern befindliche Öffnung verschließen kann. Die übrigen Armaturen, wie Wärmemengenzähler, Druckregler, Filtereinheiten, etc., werden bei dieser Vorrichtung außen an den Quer- und Längsleitungen montiert, wobei gegenüber der herkömmlichen Installationstechnik keine besonderen Vorteile erzielt werden. Es ist erforderlich, die verschiedenen Funktionseinheiten durch entsprechende Rohre zu verbinden, was bei der Vorrichtung gemäß EP-A-92 032 mittels eines Leitungsblocks in Form einer Matrix erfolgt. Mit dieser Vorrichtung wird keine Integration der verschiedenen Armaturen erreicht, weshalb für die gesamte Vorrichtung doch ein beträchtlicher Raumbedarf erforderlich ist.

Der Erfindung liegt die Aufgabe zugrunde, eine Fernheizungsanlage mit einer Anschlußvorrichtung zu schaffen, die als Schnittstelle zwischen einer Heizungsanlage und einem externen Wärme-Versorgungssystem geeignet ist, bei der wenigstens ein Teil der Armaturen bzw. der Funktionseinheiten in ein aus mehreren Kammern bestehendes Gehäuse integrierbar sind.

Die Lösung dieser Aufgabe wird bei einer Fernheizungsanlage der eingangs genannten Gattung durch die im Hauptanspruch angegebenen Merkmale erhalten. Die Anschlußvorrichtung der Fernheizungsanlage, die vorzugsweise als Übergabestation zwischen einem Fernwärmenetz und einer Hausinstallationsanlage dient, besitzt ein in mehrere Kammern unterteiltes Gehäuse, in das ein Filtereinsatz oder ein Wärmemengenzähler eingesetzt ist, der zwischen zwei Kammern wirksam ist. Auf diese Weise benötigt der Filtereinsatz bzw. der Wärmemengenzähler kein eigenes Gehäuse bzw. keine eigenen Anschlußgewinde. Es besteht vielmehr die Möglichkeit, diese Einrichtungen unmittelbar in das Gehäuse einzusetzen, wodurch ein sehr hoher Integrationsgrad für die gesamte Anschlußvorrichtung und damit eine hohe Platz-, Material- und Arbeitsersparnis erzielt wird.

Die Anschlußvorrichtung der Fernheizungsanlage wird vorzugsweise mehrere in Öffnungen eingesetzte Funktionseinheiten haben, so daß beispielsweise in eine Öffnung ein Filtereinsatz von außen einsetzbar ist und eine weitere Öffnung in Verbindung mit einem Rohrabschnitt als Ventilsitz dient. Außerdem ist es vorteilhaft, wenn die Anschlußvorrichtung mit mehreren Anschlußstutzen versehen ist, in die Manometer, Thermometer, Ventile, etc. einsetzbar sind. Eine Übergabestation für den Anschluß an das Fernwärmenetz kann dann beispielsweise aus zwei erfindungsgemäßen Anschlußvorrichtungen bestehen, bei der die eine Anschlußvorrichtung an den Vorlauf und die andere Anschlußvorrichtung an den Rücklauf des Fernwärmenetzes angeschlossen ist.

Die Unterteilung des Gehäuseinneren der Anschlußvorrichtung kann durch mehrere zueinander senkrecht stehende Trennwände erfolgen. Bei einer Anschlußvorrichtung, deren Gehäuseinneres in drei Kammern unterteilt ist, kann die erste Kammer für einen Schmutzfilter vorgesehen sein, wobei die beiden anderen Kammern für den Anschluß von Überwachungseinrichtungen vorgesehen sind. Zwischen den letztgenannten Kammern kann eine verbindende Öffnung mit einem eingesetzten Rohrabschnitt vorgesehen sein, dessen eine Seite als Ventilsitz für den Ventilteller eines Druckminderers verwendet werden kann. Der Druckminderer wird dann in diesem Fall koaxial zu dem genannten Rohrabschnitt von außen in das Gehäuse eingesetzt sein. Ein in die Trennwand eingesetzter Rohrabschnitt kann auch von beiden Seiten als Ventilsitz dienen. Beispielsweise von der einen Seite als Ventilsitz für einen Mengenbegrenzer mit Differenzdruckregler und von der anderen Seite als Ventilsitz für eine Mengendrossel.

Die Erfindung wird nachfolgend anhand der Zeichnungen näher erläutert. Es zeigen:

Figur 1 eine Anschlußvorrichtung mit einem Filtereinsatz.

Figur 2 eine zweite Ausführungsform der Anschlußvorrichtung.

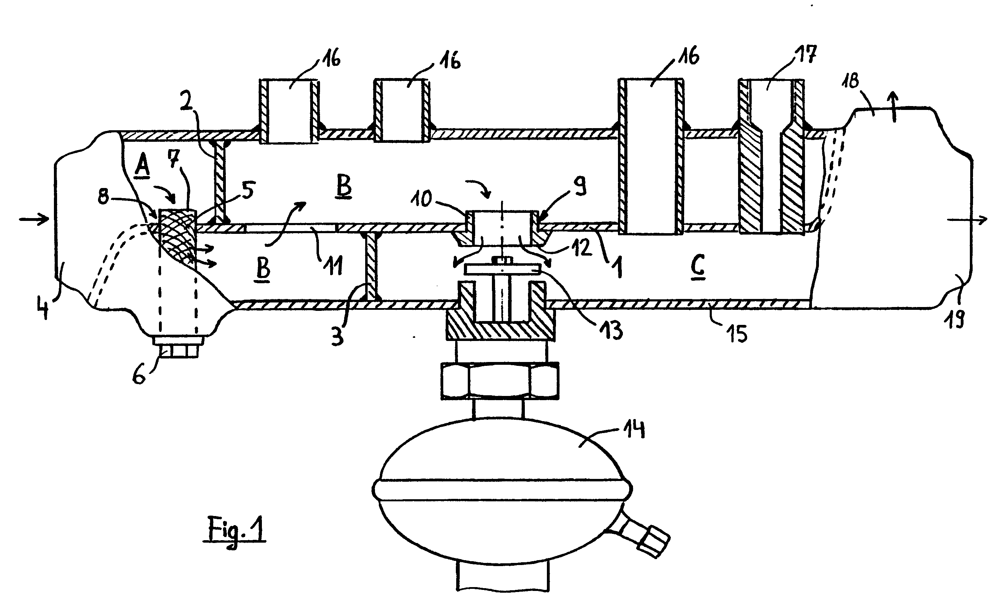

Das in Figur 1 dargestellte Ausführungsbeispiel zeigt eine Anschlußvorrichtung, deren Gehäuseinneres durch eine im wesentlichen waagerechte Trennwand 1 und zwei senkrechte Trennwände 2, 3 in drei Kammern unterteilt ist. Der zur ersten Kammer A führende Gewindeanschluß 4 ist für den Anschluß der vom Fernwärmenetz kommenden Vorlaufleitung vorgesehen. Das ankommende heiße Wasser strömt in der angegebenen Pfeilrichtung von oben in den dort offenen Filtereinsatz 5, der als zylindrisches Drahtgeflecht ausgebildet sein kann. Der Schmutz bleibt im Innern des Filtereinsatzes 5 zurück und das gereinigte Wasser dringt dann in die Kammer B ein. Damit der Filtereinsatz gelegentlich gereinigt werden kann, ist ein Schraubverschluß 6 vorgesehen, an dem der Filtereinsatz 5 herausgenommen werden kann. Im Bereich des offenen Endes 7 ist der Filtereinsatz 5 lediglich in eine in der Trennwand 1 befindliche Öffnung 8 eingesteckt.

Zwischen der zweiten Kammer B und der dritten Kammer C ist eine weitere Öffnung 9 vorgesehen, in die ein Rohrabschnitt 10 eingesetzt ist. Der Rohrabschnitt 10 kann mit der Trennwand 1 verschweißt, verlötet oder mittels einer Presspassung befestigt sein. Das von der Kammer A zur Kammer B strömende Wasser kann über den Rohrabschnitt 10 zur Kammer C gelangen.

Die Kammer B ist eigentlich in zwei Teilkammern unterteilt, die über eine Verbindungsöffnung 11 miteinander verbunden sind.

Das untere Ende des Rohrabschnittes 10 ist als Ventilsitz 12 ausgebildet, der mit dem Ventilteller 13 eines Druckminderers 14 zusammenwirkt. Der Rohrabschnitt 10 ist somit hinsichtlich seiner Funktion ein Teil des Druckminderers 14. Der Druckminderer 14 ist axial zu dem Rohrabschnitt 10 angeordnet und am Gehäuse 15 der Anschlußvorrichtung befestigt. Er besteht im wesentlichen aus einer Antriebs- und Steuereinheit, die den Ventilteller 13 in Abhängigkeit von dem jeweils vorhandenen Druck axial verschieben kann.

Bei dem dargestellten Ausführungsbeispiel sind nur wenige Anschlußstutzen 16 eingezeichnet, die selbstverständlich in größerer Anzahl für den Anschluß von Meßfühlern, Ventilen, etc. verwendet werden können. Außerdem ist noch ein integriertes Sicherheitsventil 17 angedeutet, welches durch das Gehäuse 15 hindurch bis zur Trennwand 1 geführt ist. Für den Anschluß an die hausinterne Installation sind noch zwei Anschlüsse 18 und 19 vorgesehen.

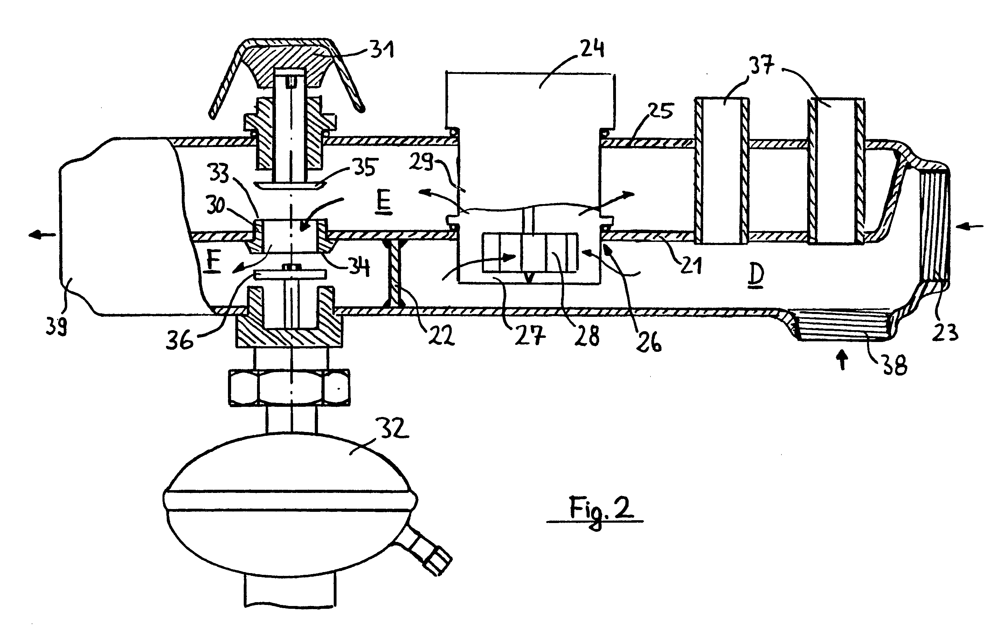

Die in Figur 2 dargestellte Anschlußvorrichtung ist im Gehäuseinneren ebenfalls durch eine waagerechte Trennwand 21 und durch eine senkrechte Trennwand 22 in mehrere Kammern D, E, F unterteilt. Diese Anschlußvorrichtung ist für den Einbau in die Rücklaufleitung bestimmt und bildet dort die Schnittstelle zwischen der Heizungsanlage und der Fernheizung.

Über den Anschluß 23 gelangt der Wärmeträger bzw. das die Heizungsanlage durchlaufende Heizwasser in die Kammer D. Über einen Wärmemengenzähler 24, der durch das Gehäuse 25 in eine in der Trennwand 21 befindliche Öffnung 26 eingesetzt ist, strömt das Wasser in die Kammer E. Das Wasser strömt dabei in den unteren Teil 27 des Wärmemengenzählers 24, wo es eine Zähleinrichtung 28 antreibt. Im mittleren Bereich 29 tritt dann das Wasser aus dem Wärmemengenzähler 24 in die Kammer E.

Zwischen der Kammer E und der Kammer F ist in die Trennwand 21 ein Rohrabschnitt 30 eingesetzt, durch den der Wärmeträger in der angegebenen Pfeilrichtung hindurchströmt. In Verlängerung zu der Mittelachse des Rohrabschnittes 30 ist oben eine Mengendrossel 31 und unten ein Mengenbegrenzer mit Differenzdruckregler 32 angeordnet. Die beiden Enden 33 und 34 des Rohrabschnittes 30 bilden jeweils einen Ventilsitz, von denen der obere mit dem Ventilteller 35 der Mengendrossel 31 und der untere mit dem Ventilteller 36 des Mengenbegrenzers 32 zusammenarbeitet.

Die Funktion der eingebauten Geräte - Wärmemengenzähler 24, Mengendrossel 31, Mengenbegrenzer 32 - sind mit herkömmlichen Geräten identisch. Da diese Geräte in der Anschlußvorrichtung integriert sind, benötigen sie kein eigenes Gehäuse, müssen nicht durch aufwendige Installationsarbeiten angeschlossen werden und sind äußerst platzsparend angeordnet. Eine derartige Anordnung läßt sich wesentlich leichter gegen Wärmeabstrahlung isolieren als dies bei bisherigen Übergabestationen der Fall war. Die gesamte Anschlußvorrichtung läßt sich industriell vorfertigen, wobei auch die durch den Rohrabschnitt 30 gebildeten Ventilsitze äußerst einfach herzustellen sind.

Es wird auch noch darauf hingewiesen, daß eine Übergabestation, die im wesentlichen aus den beiden Anschlußvorrichtungen von Figur 1 und Figur 2 bestehen kann, reproduzierbare Eigenschaften aufweist, d. h., jede derart hergestellte Übergabestation hat im wesentlichen dieselben Eigenschaften. Bei Übergabestationen, bei denen die verschiedenen Armaturen und Einrichtungen über einzelne Rohre miteinander verbunden sind, treten je nach Leitungsführung unterschiedliche Eigenschaften auf.

Die in die Trennwand 21 eingesetzten Anschlußstutzen 37 können für die Aufnahme von Fühlern, wie Manometer, Wärmemengenfühler, Thermometer verwendet werden. Selbstverständlich können auch mehr Anschlußstutzen vorgesehen sein, als hier in der Zeichnung dargestellt. Der Anschluß 38 kann beispielsweise mit der Rücklaufleitung der durch einen Warmwasserspeicher führenden Heizschlange verbunden sein. Der an der linken Seite der Anschlußvorrichtung vorgesehene Anschluß 39 wird mit der Rücklaufleitung des Fernwärmenetzes verbunden.

## Patentansprüche

1. Fernheizungsanlage mit einer zwischen einem externen Wärmeversorgungssystem und einer Heizungsanlage eines Verbrauchers angeordneten Anschlußvorrichtung, dadurch gekennzeichnet, daß das Gehäuseinnere der Anschlußvorrichtung mittels Trennwänden (1, 2, 3; 21, 22) in mehrere Kammern (A, B, C; D, E, F) unterteilt ist; daß in den Trennwänden (1, 2, 3; 21, 22) Öffnungen (8, 9; 26) vorgesehen sind, in die ein Filtereinsatz (5) oder ein Wärmemengenzähler (24) eingesetzt ist.

2. Fernheizungsanlage nach Anspruch 1, dadurch gekennzeichnet, daß der Filtereinsatz (5) in eine Öffnung (8) zwischen der ersten und einer zweiten Kammer (B) eingesetzt ist, wobei über einen Rohranschluß (4) der Wärmeträger in die erste Kammer einströmt.

3. Fernheizungsanlage nach einem der Ansprüche 1 oder 2, dadurch gekennzeichnet, daß in die Trennwand (1) zwischen zwei Kammern (B, C) ein Rohrabschnitt (10, 30) in eine Öffnung (9) eingesetzt ist, der den Ventilsitz eines mit dem Gehäuse (15) verbundenen Druckminderers (14) bildet.

4. Fernheizungsanlage nach einem der vorhergehenden Ansprüche, dadurch gekennzeichnet, daß von einer Seite des Gehäuses (1) mehrere Anschlußstutzen (16) zu unterschiedlichen Kammern (B, C) führen.

5. Fernheizungsanlage nach Anspruch 3, dadurch gekennzeichnet, daß jedes der beiden Enden (33, 34) des Rohrabschnittes (30) einen Ventilsitz bildet.

6. Fernheizungsanlage nach Anspruch 5, dadurch gekennzeichnet, daß in Verlängerung der Mittelachse des Rohrabschnittes (30) auf der einen Seite eine Mengendrossel (31) auf der anderen Seite ein Mengenbegrenzer mit Differenzdruckregeler (32) angeordnet sind, deren Ventilteller (35, 36) mit den Ventilsitzen des Rohrabschnittes (30) zusammenwirken.

## Claims

1. Distant heating plant with connecting device disposed between an external heat-supply system and a heating system of a consumer, characterized in that the interior of the housing of the connecting device is divided into several chambers (A, B, C; D, E, F) by means of partition walls (1, 2, 3; 21, 22); in that openings (8, 9; 26) are provided in the partition walls (1, 2, 3; 21, 22), a filter element (5) or a calorimeter (24) being inserted into said openings (8, 9; 26).

2. Distant heating plant according to claim 1, characterized in that the filter element (5) is inserted into an opening (8) between the first and a second chamber (0), the heat-transfer medium flowing into the first chamber via a pipe connection (4).

3. Distant heating plant according to any one of claims 1 or 2, characterized in that a pipe section (10, 30) is inserted into an opening (9) in the partition wall (1) between two chambers (B, C), said pipe section (10, 30) forming the valve seat of a pressure-reducing valve (14) connected to the housing (15).

4. Distant heating plant according to any one of the preceding claims, characterized in that, from one side of the housing (1), several connection fittings (16) lead to different chambers (B, C).

5. Distant heating plant according to claim 3, characterized in that each of the two ends (33, 34) of the pipe section (30) forms a valve seat.

6. Distant heating plant according to claim 5, characterized in that, in an extension of the centreline of the pipe section (30), disposed on one side is a flow restriction (31) and on the other side a flow limiter with differential-pressure regulator (32), the valve plates (35, 36) of which interact with the valve seats of the pipe section (30).

## Revendications

1. Installation de chauffage à distance munie d'un dispositif de raccordement disposé entre un système extérieur d'approvisionnement en énergie thermique et l'installation de chauffage d'un consommateur, caractérisée en ce que, l'intérieur du boîtier du dispositif de raccordement est réparti en plusieurs chambres (A, B, C; D, E, F) au moyen de cloisons (1, 2, 3; 21, 22); en ce que les cloisons (1, 2, 3; 21, 22) sont munies d'ouvertures (8, 9; 26) dans lesquelles est placé(e) une cartouche filtrante (5) ou un débitmètre (24).

2. Installation de chauffage à distance selon la revendication 1 caractérisée en ce que la cartouche filtrante (5) est placée dans l'ouverture (8) se trouvant entre la première et la deuxième chambre (B), le caloporteur s'écoulant dans la première chambre par l'intermédiaire d'un raccord (4).

3. Installation de chauffage à distance selon la revendication 1 ou 2 caractérisée en ce qu'un segment de tuyau (10, 30) peut être placé dans une ouverture (9) de la cloison (1) séparant les deux chambres (B, C), segment formant le siège de soupape d'un réducteur de pression (14) relié au corps (15).

4. Installation de chauffage à distance selon l'une des revendications précédentes caractérisée en ce que plusieurs tubulures de raccordement (16) débouchent sur différentes chambres (B, C) d'un côté du corps (1).

5. Installation de chauffage à distance selon la revendication 3 caractérisée en ce que chacune des deux extrémités (33, 34) du segment de tuyau (30) forme un siège de soupape.

6. Installation de chauffage à distance selon la revendication 5 caractérisée en ce que dans le prolongement de l'axe médian du segment de tuyau (30) un étrangleur de débit (31) est disposé d'un côté et un limiteur de débit avec régulateur de pression différentielle (32) de l'autre, les clapets desquels (35, 30) fonctionnant en association avec les sièges de soupapes du segment de tuyau (30).

Fig.1

Fig. 2